# FASCICULE DE BREVET EUROPEEN

(11) **EP 2 656 490 B1**
(45) Date de publication et mention de la délivrance du brevet: **20.12.2017**
(21) Numéro de dépôt: 11815450.9
(22) Date de dépôt: 20.12.2011
(51) Int. Cl.: H02K 19/10, H02K 19/06, H02K 19/20, H02K 16/04

(54) **MACHINE ELECTRIQUE TOURNANTE A STRUCTURE HOMOPOLAIRE DITE DOUBLE.**
ELEKTRISCHE DREHMASCHINE MIT SOGENANNTER DOPPELTER HOMOPOLARER STRUKTUR
ROTATING ELECTRICAL MACHINE WITH DOUBLE HOMOPOLAR STRUCTURE

(30) Priorité: 21.12.2010 FR 1060923
(43) Date de publication de la demande: 30.10.2013
(73) Titulaire: SINTERTECH, 38113 Veurey - Voroize (FR)
(72) Inventeur: BERNOT, François, F-37230 Luynes (FR)
(74) Mandataire: Derambure Conseil
(86) Numéro de dépôt international: PCT/FR2011/053071
(87) Numéro de publication internationale: WO 2012/085438

(56) Documents cités:
- EP-A2- 1 770 846
- WO-A1-2007/043161
- CH-A- 256 937
- DE-A1-102004 014 123
- DE-C- 704 879
- FR-A1- 2 809 240
- FR-A1- 2 828 027
- GB-A- 917 263
- GB-A- 190 902 959
- JP-A- H10 136 622
- SU-A1- 184 963
- US-A- 2 417 880
- US-A- 3 783 502
- US-A1- 2004 263 003
- DEMERDASH N A ET AL: "THREE DIMENSIONAL MAGNETIC FIELDS IN EXTRA HIGH SPEED MODIFIED LUNDELL ALTERNATORS COMPUTED BY A COMBINED VECTOR - SCALAR MAGNETIC POTENTIAL FINITE ELEMENT METHOD", IEEE TRANSACTIONS ON ENERGY CONVERSION, IEEE SERVICE CENTER, PISCATAWAY, NJ, US, vol. 7, no. 2, 1 juin 1992 (1992-06-01), pages 353-366, XP000305918, ISSN: 0885-8969, DOI: 10.1109/60.136231

## Description

La présente invention concerne une machine électrique tournante à structure homopolaire dite double. Elle concerne notamment une machine électrique tournante, comportant un stator et un rotor tournant autour d'un même axe de rotation que le stator, logés dans une carcasse ; au moins le stator ou le rotor comprenant au moins une bobine électrique de forme annulaire portée par une culasse annulaire magnétique comportant au moins deux pôles décalés angulairement à égale distance l'un de l'autre, ces pôles étant constitués par des pattes solidaires de ladite culasse annulaire et repliées parallèlement audit axe.

On sait qu'il existe deux classes de machines dites homopolaires :
- les machines à stator homopolaire, où le stator est constitué de phases indépendantes, formant chacune une machine homopolaire alimentée en courant alternatif, et où le rotor est de structure classique coplanaire ;
- les machines à rotor homopolaire, où le stator est de structure classique coplanaire, et le rotor de structure homopolaire, avec son enroulement de magnétisation relié physiquement au stator et alimenté en courant continu.

### Etat de l'art antérieur des machines à stator homopolaire simple alimenté en courant alternatif

A titre d'exemple, les demandes de brevet FR 2 809 240 et FR 2 828 027 divulguent la structure et le fonctionnement d'une machine électrique du type à stator homopolaire simple. De plus, les demandes de brevet FR 10 01805, FR 10 01806 et FR 10 01807 divulguent des machines homopolaires simples améliorées, ces machines étant à stator homopolaire alimenté en courant alternatif et à rotor coplanaire.

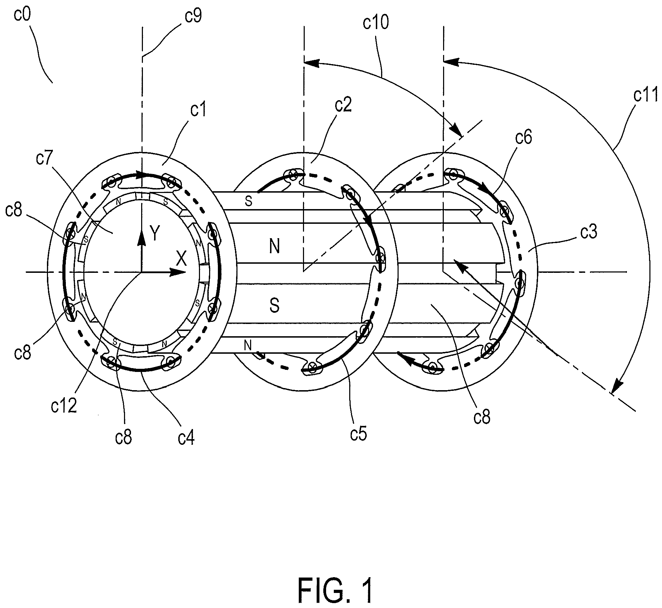

La figure 1 présente l'état de l'art antérieur pour ladite structure homopolaire simple, dans une version octopolaire, à stator à griffes triphasé et rotor à aimants superficiels. Il convient de remarquer que :
- une autre réalisation peut comporter un rotor à aimants enterrés ;
- une autre réalisation peut comporter un stator polyphasé, le nombre de phase étant quelconque (supérieur ou égal à l'unité) ;
- une autre réalisation peut comporter un rotor externe inversé.

La réalisation de la figure 1 comporte trois stators identiques c1, c2 et c3, formant une machine homopolaire simple triphasée c0. Lesdits stators c1, c2 et c3, seront notés dans ce document phases lorsqu'ils sont complets avec leur bobine c4, c5 ou c6. Ces galettes sont déphasées les unes par rapport aux autres d'un angle de 30° mécanique environ. Dans le cas de la réalisation présentée à la figure 1, l'angle c10 vaut sensiblement 30° et l'angle c11 vaut sensiblement 60°. L'angle c10 correspond sensiblement au tiers de l'angle électrique de la machine tournante, ledit angle électrique étant égal à 360° (un tour) divisé par le nombre de paires de pôles (quatre dans ce cas octopolaire). L'angle c11 vaut sensiblement le double de l'angle c10.

Ces décalages angulaires peuvent être différents, en fonction des applications, mais ces variations relèvent de l'état de l'art antérieur connu, appliqué à d'autres structures de machines tournantes notamment. Elles ne servent qu'à optimiser la machine finale. Une version diphasée de ladite machine ne comporterait que deux stators c1 et c2, qui seraient alors décalés d'un angle c10 = 45° dans la réalisation octopolaire décrite à la figure 1. Les règles de calcul des décalages angulaires entre phase ou stators respectifs font partie de l'état de l'art antérieur. Dans une version polyphasée, de manière générale, le nombre de phases électriques d'alimentation est au moins égal au nombre de phases c1, c2, c3.

Dans la réalisation de la figure 1, les stators c1, c2 et c3 ont une structure à griffe, qui est caractérisée par une ondulation apparente des bobines statoriques, notées respectivement c4, c5 et c6 autour des plans de rotation X/Y c12 de chaque stator. Ladite ondulation peut être obtenue par vrillage des dents statoriques, tel que cela est divulgué dans la demande de brevet FR 2 809 240, ou encore par encerclement des bobines c4, c5 et c6, tel que cela est divulgué dans la demande de brevet FR 2 828 027.

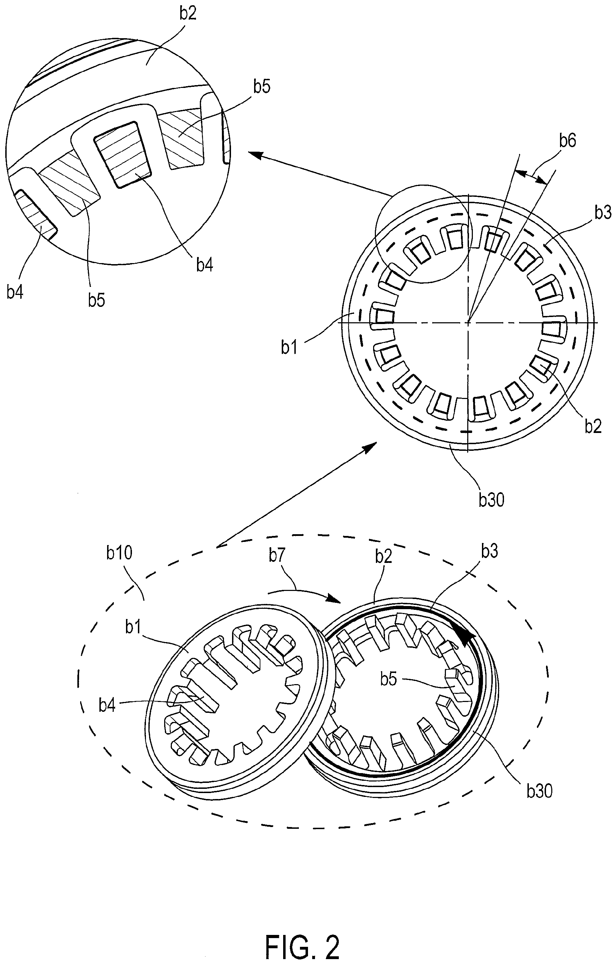

Dans cette dernière réalisation astucieuse, présentée à la figure 1 et 2, pour un nombre de pôles égal à 28, les stators c1, c2 et c3 sont tous réalisés de la même façon b10, à partir de deux galettes identiques b1 et b2, enserrant une bobine b3. Lesdites galettes sont assemblées l'une sur l'autre, conformément à l'enseignement de la demande de brevet FR 2 828 027, de façon à ce que leurs dents respectives b4 et b5 soient sensiblement équidistantes. La galette b1 est posée sur la galette b2, comme l'indique la flèche b7. Les zones de contact b30 entre les galettes b1 et b2 doivent être correctement réalisées, afin d'éviter les entrefers magnétiques indésirables dans la zone de contact. La forme de cette zone de contact b30 peut ne pas être constituée d'un plan coplanaire selon X/Y c12, mais adopter toute autre forme comme une ondulation ou encore un crénelage, qui autoriserait le calage angulaire relatif desdites galettes b1 et b2. La galette b2 est décalée angulairement par rapport à la galette b1. Ledit angle de calage b6 vaut dans le cas du stator de la figure 2 sensiblement la moitié de l'angle électrique de la machine, c'est à dire pour cette polarité de 14 paires de pôles présentée à la figure 2, la valeur : 12,857°.

Il est important de noter que la mise en oeuvre des réalisations des figures 1 et 2 se traduit par le fait que chaque dent b4 et b5 forme un pôle électrique complet de la machine. Nous sommes par conséquent en présence dans la figure 1 d'un assemblage de machines électriques tournantes monophasées, réunies axialement autour d'un même rotor c7. Ledit rotor peut être de plusieurs natures, synchrone, asynchrone ou à réluctance variable. Les différentes réalisations connues à ce jour des rotors font partie de l'état de l'art antérieur, elles s'adaptent toutes à la présence d'un ensemble de stators à griffes, tel que décrit à la figure 1.

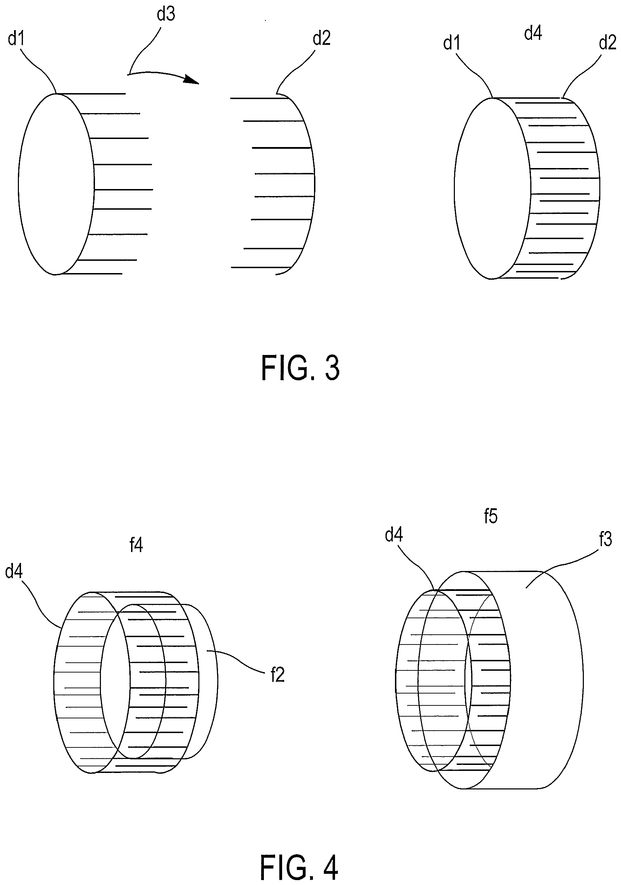

Nous nommerons dans la suite de ce document les stators c1, c2 et c3 sous le nom de «phase», afin d'en clarifier le rôle. Dans toute la description qui suit, nous considérerons donc comme formant une phase complète l'ensemble formé par deux galettes b1 et b2, enserrant une bobine b3. La figure 3 illustre de façon plus synthétique cette proposition, en présentant ces deux galettes d1 pour b1, et d2 pour b2, qui sont réunies l'une contre l'autre selon la direction d3, pour former une seule phase d4, telle que décrite b10 ci-dessus, correspondant à la réunion de deux galettes b1 et b2, enserrant une bobine b3. Il faut noter à ce stade de la description de l'état de l'art, l'intérêt de prévoir un moyen de maintien axial des galettes b1 et b2 l'une sur l'autre, qui peut consister par exemple en une rondelle élastique de serrage, montée en un endroit quelconque de l'axe de rotation du plan XY c12.

Toutes ces descriptions des dispositifs représentés sur les figures 1 et 2 font partie de l'état de l'art antérieur. Elles incluent la version à stator inversé, où les dents b4 et b5 des galettes b1 et b2 sont situées sur la périphérie extérieure, avec un rotor qui est situé extérieurement au stator.

L'état de l'art antérieur fait apparaître clairement l'interchangeabilité des différents éléments d'une machine tournante électrique, notamment leur position relative interne ou externe, tel que cela est représenté sur la figure 4. La phase d4 comprenant deux galettes d1 et d2, peut être située à l'extérieur d'une pièce f2, pour former alors une machine tournante homopolaire monophasée f4. La phase d4, constituée de deux galettes d1 et d2 peut être située à l'intérieur d'une pièce f3, pour former alors une machine tournante homopolaire monophasée f5. La juxtaposition axiale des ces machines complètes f4 ou f5, décalées angulairement d'un angle adéquat, tel que connu de l'état de l'art explicité ci-dessus, forme une machine tournante polyphasée.

Tel que cela est représenté sur la figure 4, les pièces d4, f2 et f3 peuvent être statiques ou tournantes. Si une pièce d4 est tournante, il faut alors l'alimenter par des bagues ou tout autre système connu de l'homme de l'art (des diodes tournantes par exemple).

La combinaison d4 statique et f2 à aimants tournants (ou inducteur bobiné), correspond à une machine f4 formant une machine dite synchrone. La phase d4 est alors alimentée en courant alternatif et selon les procédés de contrôle dits brushless connus de l'homme de l'art.

La combinaison d4 statique et f3 à aimants tournants (ou inducteur bobiné), correspond à une machine f5 formant une machine dite synchrone inversée. La phase d4 est alors alimentée en courant alternatif et selon les procédés de contrôle dits brushless connus.

La combinaison f3 statique et d4 tournant, correspond à une machine f5 formant un alternateur à griffes, dit de Lundell, largement utilisé dans les moteurs thermiques.

Toutes les autres combinaisons sont possibles, comme d4 tournant et f2 statique, ou encore d4 tournant et f3 statique, ou encore les deux parties d4 et f2 tournantes, ou encore les deux parties d4 et f3 tournantes. Ces différentes combinaisons sont largement décrites dans l'état de l'art, pour les machines tournantes à structure coplanaire.

La liste suivante regroupe de façon non-exhaustive, différentes variantes possibles d'applications de l'invention dans une machine électrique tournante
- machine synchrone avec rotor à aimants ou bobiné ;
- machine synchrone avec rotor à aimants réalisés en plasto-aimants, c'est à dire formés d'une poudre magnétique imprégnée de résine ;
- machine asynchrone avec rotor à cage ou bobiné ;
- machine à réluctance variable, à rotor passif ou actif (aimanté).

La liste suivante regroupe de façon non-exhaustive différentes variantes possibles de réalisation de l'invention pour former une machine électrique tournante :
- la disposition relative des différentes parties d4, f2 et f3, pour former une machine de type f4 ou f5, conduit à une machine à stator extérieur ou à stator intérieur, dite inversée ;
- machine monophasée, diphasée, triphasée ou polyphasée, obtenue par empilement axial de machines élémentaires f4 ou f5 correctement déphasées les unes par rapport aux autres d'un angle électrique sensiblement égal à un tour électrique (360° divisé par le nombre de paires de pôles) divisé par le nombre de phases, ledit déphasage angulaire pouvant être créé au niveau du rotor ou du stator ;
- machine polyphasée, comportant au moins une phase, où chaque phase électrique comprend plusieurs machines élémentaires f4 ou f5 électriquement connectées en série ou en parallèle électriquement ;
- machine polyphasée, comportant au moins une phase, où les phases d4 sont toutes alignées angulairement et où le déphasage inter-phase est causé par la rotation au niveau du rotor, soit des aimants, soit des inducteurs bobinés, soit des conducteurs de la pièce complémentaire f2 ou f3, soit des saillances polaires ;
- machine polyphasée, comportant au moins une phase, où les bobines b3 sont divisées en plusieurs enroulements distincts, eux-mêmes couplés d'une phase à l'autre en zig-zag, étoile, ou triangle pour former une machine polyphasée complète ;
- l'ensemble peut former aussi un transformateur statique, où toutes les parties d4, f2 et f3 étant statiques, ces dernières forment un déphaseur statique.

### Etat de l'art antérieur des machines à rotor homopolaire alimenté en courant continu

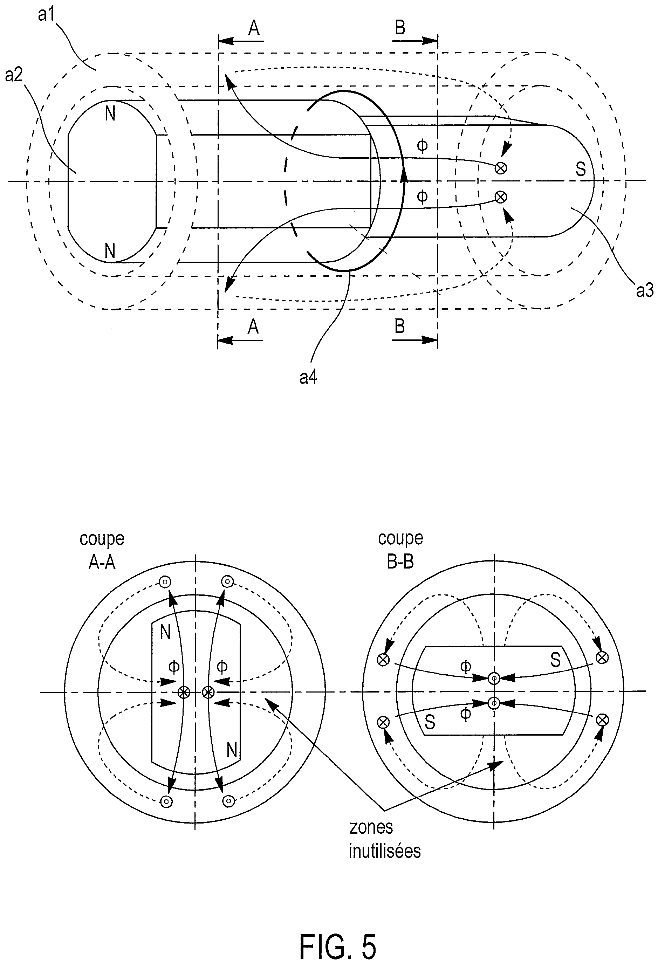

La figure 5 représente la structure classique de la machine à rotor homopolaire, où un stator polyphasé tetrapolaire coplanaire a1 est placé autour d'un rotor séparé en deux demi-rotors a2 et a3, décalés angulairement l'un par rapport à l'autre de 90° mécanique. La bobine d'excitation rotorique a4 est située dans le plan médian de réunion des deux demi-rotors a2 et a3. Une fois alimentée en courant continu, ladite bobine a4 génère un flux magnétique noté Φ, qui traverse radialement l'entrefer séparant le rotor du stator en face des zones notées S du côté du rotor a3 et en face des zones notées N du côté du rotor a2. Il en résulte que la moitié des conducteurs du stator a1 ne reçoivent aucun flux magnétique rotorique et ne participent donc pas à la génération de couple moteur.

L'utilisation de cette topologie de machine a donc été réduite à des applications particulières, où le rotor doit par exemple tourner très vite, ou encore où la température ambiante de fonctionnement était incompatible avec les technologies de bobinage classique. L'application la plus remarquable de cette technologie consiste en une machine cryogénique, où l'enroulement en céramique ne pouvait pas supporter une mise en rotation.

Ces structures homopolaires présentent de manière générale le défaut principal de fournir la moitié du couple qu'une machine coplanaire similaire pourrait fournir. Ceci est la principale raison de leur faible utilisation industrielle.

La présente invention, qui permet de résoudre ces problèmes, concerne une machine électrique du type moteur homopolaire à structure dite double e0, c'est à dire où le rotor et le stator sont simultanément homopolaires.

Plus précisément, cette machine électrique de type moteur comprend un empilement de paires de stators homopolaires simples b10/d4, formant des machines élémentaires monophasées f4, ou f5 dans une version inversée, lesdites machines élémentaires étant alimentées en courant alternatif. Le rotor e15 est commun à tous ces stators, il est passif c'est à dire composé de façon complète ou partielle de matériau ferromagnétique. L'excitation rotorique peut être active dans une première réalisation qui fait intervenir un bobinage e2 de préférence annulaire et fixe. L'excitation rotorique peut être passive dans une autre réalisation qui fait intervenir au moins un aimant annulaire, de préférence fixe, en remplacement de l'ensemble formé par la pièce ferromagnétique e1 et la bobine e2.

La configuration finale du moteur homopolaire à structure dite double e0 concerne toutes les variantes f4 / f5 représentées sur la figure 4, ainsi que celles non-mentionnées qui relèvent de l'état de l'art antérieur.

Il apparaît que lorsque le rotor a2 / a3 inducteur générant un flux magnétique continu, d'un moteur devient homopolaire, de part et d'autre d'une ligne médiane recevant la bobine d'excitation a4, un pôle sur deux devient inactif de chaque côté de la machine a2 & a3. Le même principe est appliqué à l'invention décrite dans ce document, en faisant évoluer la version homopolaire simple d4 / b10, dont le rotor contient autant de pôles que le stator comporte de dents e16.

Un mode de réalisation du dispositif selon l'invention sera décrit ci-après, à titre d'exemple non limitatif, avec référence aux dessins annexés dans lesquels :
La figure 1 est une représentation schématique d'une machine électrique homopolaire simple de l'état de la technique, dans une version octopolaire, à stator à griffes triphasé et rotor à aimants superficiels.
La figure 2 est une représentation schématique des stators de la machine électrique représentée sur la figure 1.
La figure 3 est une représentation schématique des stators ou phases constitués chacun d'un ensemble formé de deux galettes enserrant une bobine.
La figure 4 est une représentation schématique de différentes façons de disposer les phases par rapport à une pièce de référence.
La figure 5 est une représentation schématique de la structure classique d'une machine à rotor homopolaire, où un stator polyphasé tetrapolaire coplanaire est placé autour d'un rotor séparé en deux demi - rotors décalés angulairement.
Les figures 6 et 7 sont une représentation schématique de la structure générale de la machine homopolaire double, selon l'invention, dans une réalisation correspondant à une seule machine alternative monophasée homopolaire double.
La figure 8 représente le trajet selon la coupe OB du seul flux rotorique, en l'absence de courants dans les bobines statoriques de la machine homopolaire double selon l'invention.
La figure 9 représente le trajet selon la coupe OB des deux flux statoriques, en l'absence de courants dans la bobine d'excitation rotorique de la machine homopolaire double selon l'invention.
La figure 10 est une représentation schématique de différentes variantes possibles du rotor de la machine homopolaire double selon l'invention.
La figure 11 est une représentation schématique d'une forme de réalisation de la forme radiale de la dent statorique et/ou de la dent rotorique.
La figure 12 est une représentation schématique d'une réalisation du rotor, dans laquelle les pôles sont vrillés de façon à ce que chacune de ses extrémités soit décalée angulairement d'un demi-tour électrique.

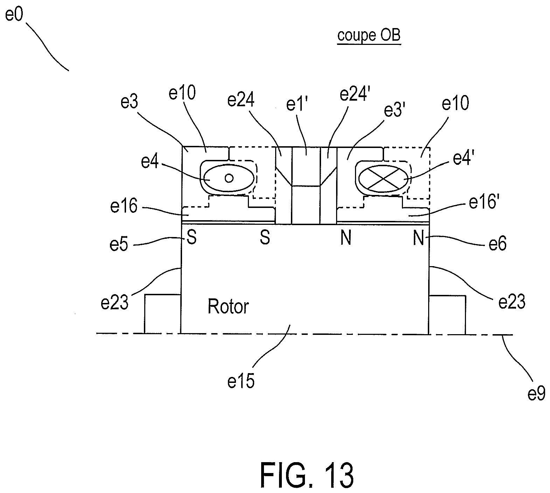

La figure 13 est une représentation schématique de la machine homopolaire double selon l'axe OB.

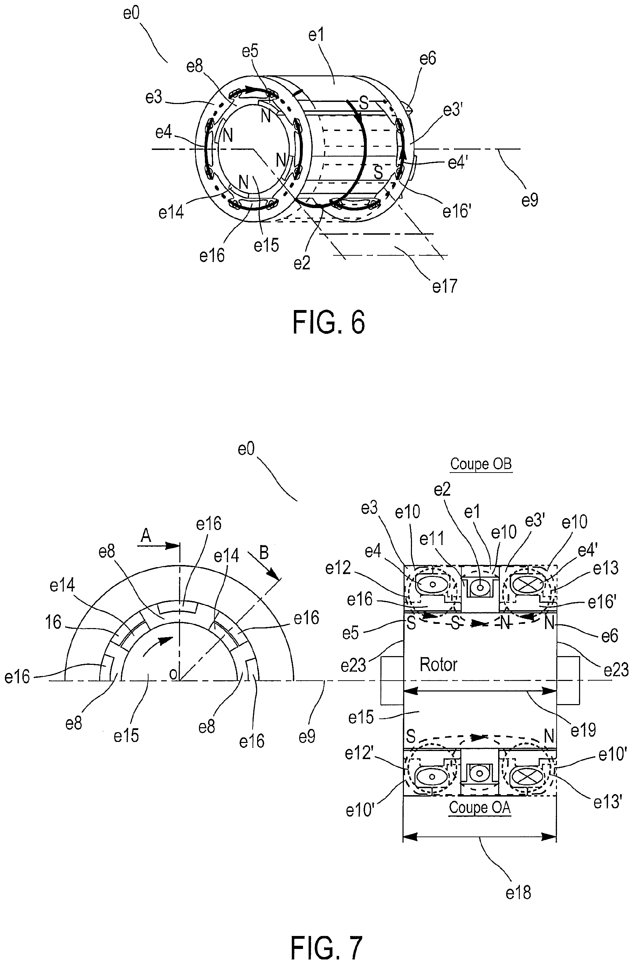

Les figures 6 et 7 représentent la structure générale e0 de la machine homopolaire double, objet de l'invention, dans une réalisation correspondant à une seule machine alternative monophasée e0 homopolaire double.

Deux phases de machine homopolaire simple e3 et e3' sont alignées concentriquement sur un même axe de rotation e9, de façon à ce que leurs dents e16 / e16' soient colinéaires dans le même plan de coupe radial e17. Lesdites phases e3 et e3' sont séparées par une pièce de retour de flux ferromagnétique e1 de forme sensiblement annulaire, ladite pièce e1 étant sensiblement centrée sur le même axe de rotation e9 que lesdites phases e3 et e3'.

L'ensemble formé par les phases e3 et e3' et la pièce de retour de flux e1 entoure un rotor ferromagnétique e15, qui est sensiblement centré sur le même axe de rotation e9. Ledit rotor ferromagnétique e15, comporte autant de pôles saillants e14, que de paires de dents e16 / e16'. Cette disposition conduit à ménager entre chaque pôle saillant e14, un espace vide e8, qui s'oppose au droit en face dudit espace vide e8, à la circulation radiale dans l'entrefer du flux magnétique formé de la réunion de e10 et de e12 du côté e5 et de la réunion de e10 et de e13 du côté e6. Ledit rotor ferromagnétique e15 a une longueur axiale sensiblement égale à celle du groupe formé par les deux phases de machine homopolaire simple e3 et e3', en incluant la pièce interphase e1. Ledit rotor ferromagnétique e15 est sensiblement aligné axialement avec l'ensemble formé par les deux phases de machine homopolaire simple e3 et e3', en incluant la pièce interphase e1

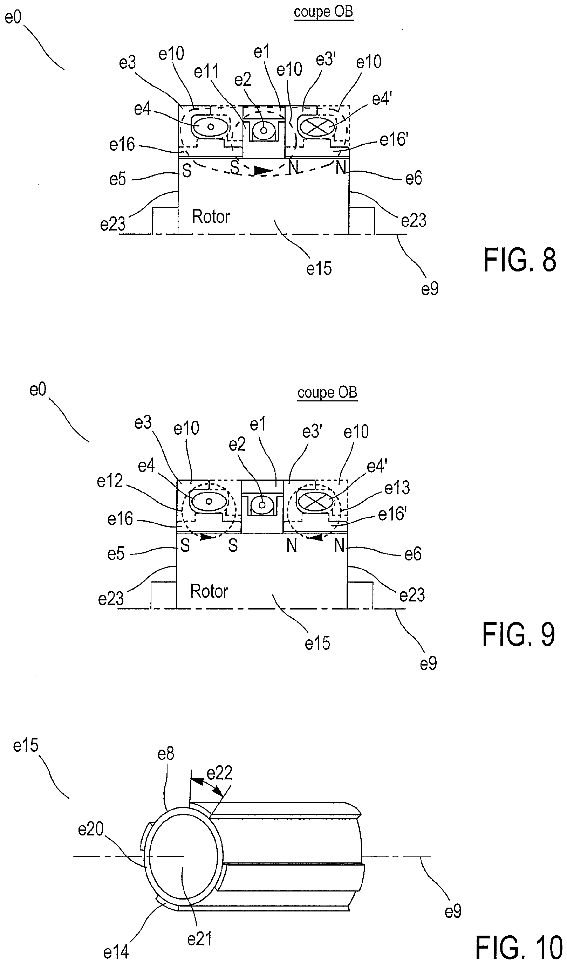

La longueur optimale et les dimensions relatives de chaque dent e16 / e16', connues de l'homme de l'art pour une machine homopolaire simple telle que décrite ci-dessus, s'appliquent par transposition à la machine objet de cette invention. Les règles générales, connues de l'homme de l'art, de dimensionnement des machines tournantes électriques synchrones, notamment les machines homopolaires simples s'appliquent à la machine selon l'invention. La longueur angulaire e22 optimale, telle que représentée à la figure 10, vaut sensiblement deux tiers de la longueur électrique polaire, c'est à dire mécaniquement deux tiers de 360° divisé par le nombre de dents e16 / e16' de la machine complète.

Les phases e3 et e3' sont sensiblement identiques, à la différence près du sens de connexion de leur bobine e4 et e4', qui sont opposées, de façon à ce que les flux magnétiques e12 et e13, propres à chacune desdites phases e3 et e3', circule dans l'entrefer de façon symétrique.

La bobine d'excitation rotorique homopolaire e2 génère un flux magnétique homopolaire e10, qui circule par l'entrefer, le rotor e15, les phases e3 et e3' et la pièce de retour de flux magnétique e1. Ledit flux magnétique rotorique s'additionne du côté e5 à celui émis par la phase e3, et s'oppose du côté e6 à celui émis par la phase e3'. Il en résulte une addition des forces électromagnétiques d'interaction correspondantes à ces deux côtés e5 et e6 de la machine. Ledit flux magnétique e10 est conduit au niveau du stator par la pièce ferromagnétique de retour de flux e1.

Afin de mieux préciser les rôles de chacune des pièces formant la machine de l'invention, la figure 8 représente le trajet, selon la coupe OB, du seul flux rotorique e10, en l'absence de courants dans les bobines statoriques e4 et e4'. Ledit flux rotorique e10 circule radialement au niveau de l'entrefer séparant le rotor e15 des phases e3 et e3', de part et d'autre des bobines statoriques e4 et e4'. Selon la convention adoptée à la figure 8, ledit flux rotorique e10 pénètre dans le rotor du côté e5, noté S, et il sort du rotor du côté e6, noté N.

Afin de mieux préciser les rôles de chacune des pièces formant la machine de l'invention, la figure 9 représente le trajet, selon la coupe OB, des deux flux statoriques e12 et e13, en l'absence de courants dans la bobine d'excitation rotorique e2. Le flux statorique e12 circule radialement au niveau e5 de l'entrefer séparant le rotor e15 de la phase e3, entourant la bobine statorique e4, mais sans passer par la pièce de retour de flux e1. Le flux statorique e13 circule radialement au niveau e6 de l'entrefer séparant le rotor e15 de la phase e3', entourant la bobine statorique e4', mais sans passer par la pièce de retour de flux e1.

En considérant la circulation du flux magnétique à l'endroit où une dent e16 se trouve en face d'un évidement e8, comme le précise la coupe OA de la partie inférieure de la figure 7, il apparaît que l'augmentation de la réluctance magnétique d'entrefer produit une atténuation très importante du flux magnétique e10' généré par la bobine e2, ainsi que des flux magnétiques e12' et e13', générés par les phases e3 et e3'. Si l'espace e8 avait été rempli par une dent e16, l'interaction entre les flux magnétiques e10, e12 et e13 aurait alors généré une force d'interaction magnétique opposée à celle produite au niveau du pôle saillant e14, vu sur la coupe OB de la partie supérieure de la figure 7. Il apparaît par conséquent que c'est la suppression d'un pôle e14 sur deux dans le rotor, qui permet au couple moteur moyen généré par la machine d'être positif.

La figure 10 présente les différentes variantes de réalisation possibles du rotor e15, en le décomposant en trois éléments fondamentaux, à savoir les pôles saillants e14, un premier anneau e20 et un cylindre interne e21. Les pôles saillants e14 doivent être réalisées dans un matériau ferromagnétique, car ils véhiculent le flux magnétique rotorique e10.

Dans une première réalisation, l'anneau e20 et le cylindre e21 peuvent être réalisés dans le même matériau que les pôles saillants e14, formant une seule et même pièce ou encore plusieurs pièces différentes. Toutes les combinaisons possibles sont autorisées, selon les règles de l'art connues.

Dans une autre réalisation, l'anneau e20 et/ou le cylindre e21 peuvent être réalisés dans un matériau non ferromagnétique, mais les pôles saillants e14 sont toujours réalisés dans un matériau ferromagnétique.

Dans une autre réalisation, d'autres anneaux de matériau quelconque peuvent intervenir dans la constitution du rotor, situés entre l'anneau e20 et le disque e21.

Les pôles saillants e14 peuvent être réalisés avec un matériau compris dans la liste non exhaustive suivante : acier massif, poudre de fer frittée ou pressée, tôle emboutie et assemblée maintenue par poinçonnage ou soudure, etc.

Les circuits magnétiques des phases e3 et e3' peuvent être réalisés avec un matériau compris dans la liste non exhaustive suivante : poudre de fer pressée, tôle emboutie et assemblée maintenue par poinçonnage ou soudure, etc.

L'anneau e20 et le cylindre e21 peuvent être réalisés avec un matériau compris dans la liste non exhaustive suivante : acier massif, poudre de fer pressée, tôle emboutie et assemblée maintenue par poinçonnage ou soudure, matériau plastique formée par injection ou usinage, aluminium formée par injection ou usinage etc.

Dans une réalisation astucieuse, le rotor e15 est formé d'une pièce monobloc intégrant les moyens de maintien en rotation, le cylindre e21, l'anneau e20 et les pôles e14.

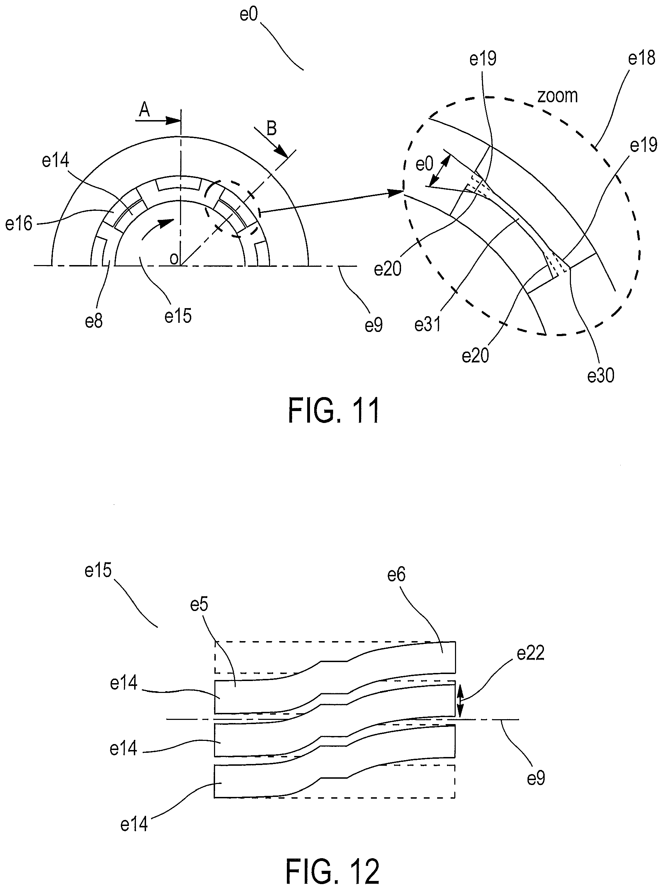

La figure 12 représente une réalisation astucieuse du rotor e15, dans laquelle les pôles e14 sont vrillés de façon à ce que chacune de ses extrémités e5 et e6 soit décalée angulairement d'un demi-tour électrique, c'est-à-dire d'un pas polaire, qui correspond à la distance entre les axes de symétrie des pôles e14. Dans ladite réalisation, les bobines statoriques e4 et e4' sont alors connectées en phase, afin d'émettre des flux magnétiques e12 et e13 en phase.

La forme des dents e16 et des pôles e14 vu sur un plan cylindrique développé au niveau de l'entrefer, ne doit pas forcément définir un entrefer constant, elle peut avoir toute autre forme, telle que notamment une forme semi-annulaire, elliptique, semi-elliptique, arrondie, circulaire, semi-circulaire, l'homme de l'art pouvant choisir la forme en fonction des circonstances.

Dans une réalisation polyphasée de la machine de l'invention, le nombre de phases étant supérieur ou égal à l'unité, la machine selon l'invention comporte au moins autant de machines élémentaires e0 formant chacune une machine monophasée que de phases électriques extérieures. Dans cette disposition polyphasée, toutes ces machines monophasées e0 sont alignées le long de l'axe e9 et régulièrement décalées d'un angle électrique égal à sensiblement un tour complet (360°), divisé par le nombre de phases, électriques extérieures, divisé par le nombre de pôles rotoriques e14.

Dans une réalisation particulière de cette machine polyphasée, chaque phase électrique extérieure comporte au moins deux machines élémentaires e0 juxtaposées axialement ou distantes et séparées d'une ou plusieurs autre machines élémentaires e0.

Dans une réalisation polyphasée, les pièces de calage qui séparent les machines monophasées e0, peuvent avantageusement utiliser les mêmes techniques que celles décrites dans la demande de brevet FR 10 01805, en considérant d'un point de vue fonctionnel les groupes e0 comme des phases homopolaires simples complètes, telles que décrites dans ladite demande de brevet. Lesdites pièces de calage peuvent être injectées de résine sur les faces latérales e23 d'un plan de coupe perpendiculaire à l'axe e9 de la machine monophasée e0 partiellement ou totalement assemblée.

Dans une réalisation polyphasée, le calage entre les machines monophasées e0 peut être réalisé en utilisant des ergots et des trous ménagés dans les faces latérales e23 d'un plan de coupe perpendiculaire à l'axe e9 de la machine monophasée e0. Dans une autre réalisation polyphasée, le moyen de calage angulaire peut être réalisé en utilisant des ondulations ou formes complémentaires ménagées sur lesdites faces latérales e23 d'un plan de coupe perpendiculaire à l'axe e9 de la machine monophasée e0.

La bobine d'excitation rotorique e2 est réalisée dans une réalisation particulière en bobinant du fil conducteur autour d'un mandrin isolant magnétique et électrique e11. Ledit mandrin est avantageusement utilisé pour caler en rotation les deux phases e3 et e3', de façon à ce que leurs dents respectives soient alignées dans un même plan de coupe radial. Ledit alignement peut utiliser soit des encoches ménagées dans les faces radiales du mandrin e11 et/ou des phases e3 et e3', soit des ondulations sur lesdites faces, soit des trous recevant des pions de centrage, soit tout autre procédé de maintien.

Dans une réalisation particulière, la bobine d'excitation rotorique e2 est réalisée sur un support qui ne participe pas au calage angulaire entre les phases e3 / e3' et la pièce de retour de flux e1, auquel cas ledit calage angulaire peut être réalisé sur lesdites pièces e1/e3/e3' par une ondulation, ou un crénelage ou tout autre procédé, tel que décrit dans la demande de brevet FR 10 01805.

Dans une réalisation particulière, la bobine d'excitation rotorique e2 et les bobines e4 / e4' ne comportent que quelques spires, réalisées avec du fil de préférence rigide, et isolées par une céramique isolante.

Dans une réalisation particulière la bobine rotorique e2, et les bobines e4 / e4' peuvent être réalisées en utilisant un fil dont la section appartient de façon non-exclusive à la liste suivante : carré, rectangulaire, méplat, hexagonal, octogonal, polygonal, elliptique, rond, etc.

Dans une réalisation particulière la bobine rotorique e2 et/ou les bobines statoriques e4 / e4' comprennent au moins deux bobines distinctes assemblées l'une contre l'autre, selon un plan axial et/ou radial, lesdites bobines étant connectées entre elles en parallèle et/ou en série, ou en mode zig-zag.

La pièce de calage axial entre deux phases e3 et e3' d'une même machine monophasée e0 peut être réalisée en adoptant les mêmes techniques que celles décrites dans la demande de brevet FR 10 01805, en considérant d'un point de vue fonctionnel les plans de jonctions radiaux respectivement d'une phase e3 ou e3' et la face en regard de ladite phase du mandrin de bobinage e11.

Dans une réalisation particulière, les phases statoriques e3 / e3' et/ou la bobine rotorique e2 sont encapsulées par une résine ou une céramique, déposée sous forme de poudre puis cuite, avec leur circuit magnétique, séparément, ou assemblées dans le moteur.

Dans une réalisation particulière le matériau ferromagnétique formant les phases e3 / e3' comporte l'un quelconque des matériaux pris dans la liste non exhaustive suivante : la poudre de fer comprimée, frittée, ou pressée, la tôle découpée, et poinçonnée ou rivetée ou serrée par un lien extérieur, la ferrite, etc.

Dans une réalisation particulière le matériau ferromagnétique formant la pièce de retour de flux e1 et/ou la/les pièces de retour de flux e1' comprend l'un quelconque des matériaux pris dans la liste non exhaustive suivante: la poudre de fer comprimée, frittée, ou pressée, la tôle découpée, et poinçonnée ou rivetée ou serrée par un lien extérieur, la ferrite, de l'acier massif usiné, ou moulé, etc.

Dans une réalisation particulière, la bobine rotorique e2 est supprimée et la pièce de retour de flux e1 est remplacée par au moins un aimant e1' de forme sensiblement annulaire, magnétisé sensiblement selon l'axe e9. Ledit aimant annulaire e1' prend alors la place de la pièce de retour de flux e1. Dans une autre réalisation particulière, de la même disposition constructive, l'aimant annulaire e1' est enserré entre une ou deux pièces ferromagnétiques e24 / e24', de forme sensiblement annulaire trapézoïdale ou elliptique, qui permettent de concentrer le flux issu de l'aimant annulaire e1', lesdites pièces e24 / e24' ayant une forme de tronc de cône, avec le côté le plus large contre l'aimant e1'.

La forme de la dent statorique et les dispositions constructives décrites dans la demande de brevet FR 10 01807 s'appliquent à la conception de la machine homopolaire double monophasée e0.

La figure 11 représente en vue agrandie e18, une forme astucieuse de réalisation de la forme radiale de la dent statorique e16 / e16' et/ou de la dent rotorique e14, afin de conférer à la force magnétomotrice d'entrefer une forme d'onde sensiblement sinusoïdale, selon son angle électrique.

La dent statorique e16 comporte sur chacune de ses extrémités angulaires un décrochement radial e19, qui est destiné à moduler radialement la valeur de l'entrefer e0. La forme radiale desdits décrochements radiaux e19 est comprise dans la liste non-exhaustive suivante : linéaire en forme de pans coupés, arrondie, elliptique, arrondie pour donner à l'entrefer local e0 une valeur sensiblement indexée sur l'inverse d'un cosinus de l'angle électrique, dont l'origine est prise sur l'axe de symétrie de la dent e16.

Le pôle rotorique e14 comporte sur chacune de ses extrémités angulaires un décrochement radial e20, qui est destiné à moduler radialement la valeur de l'entrefer e0. La forme radiale desdits décrochements radiaux e20 est comprise dans la liste non-exhaustive suivante: linéaire en forme de pans coupés, arrondie, elliptique, arrondie pour donner à l'entrefer local e0 une valeur sensiblement indexée sur l'inverse d'un cosinus de l'angle électrique, dont l'origine est prise sur l'axe de symétrie du pôle e16.

De façon avantageuse, l'entrefer e0 au niveau latéral e30 de la dent e19 / e20 vaut le double de l'entrefer au centre e31 des dents.

L'une ou l'autre, ou les deux dispositions constructives e20 et e19 peuvent être utilisées dans la machine homopolaire double e0.

Les dispositions constructives décrites dans la demande de brevet FR 10 01806, permettant de former une machine polyphasée, s'appliquent à la conception de la machine homopolaire double monophasée e0.

Dans une réalisation particulière, une même machine homopolaire double monophasée, peut être réalisée en empilant axialement plusieurs machines complètes e0, pour former une même phase. Lesdites machines e0 sont alors sensiblement calées angulairement et le rotor e15 a une longueur axiale sensiblement égale à la longueur axiale de l'ensemble de machines e0, formant ladite machine monophasée.

Dans une réalisation particulière, la bobine rotorique e2 peut être alimentée en courant alternatif, à une fréquence et une phase électrique, égale ou différente de la fréquence d'alimentation des bobines statoriques e4 / e4'.

Dans une réalisation particulière, la forme extérieure des phases e3 / e3' et de la pièce de retour de flux e1 ne s'insère pas dans une forme cylindrique, mais dans une autre forme qui peut être rectangulaire, elliptique, polygonale ou autre, l'homme de l'art saura alors adapter la réalisation de la machine à cette disposition constructive particulière.

Il est particulièrement spécifié que la présente invention a été décrite dans une topologie de type directe, correspondant à une structure de machine de type f4, comportant entre autres un rotor interne e15, deux phases d4 externes, enserrant une bobine e2 et reliées entre elles par une pièce de retour de flux e1. Mais dans une autre réalisation de type f5, dite inversée, ladite machine e0 comporte entre autres un rotor externe e15, deux phases d4 internes, enserrant une bobine e2 et reliées entre elles par une pièce interne de retour de flux e1. Le passage de la description exposée dans ce document pour la structure de machine f4, à la structure de machine f5, s'obtient en effectuant une transformation symétrique radiale autour de l'entrefer des pièces constituant les phases d4, notamment sur les dents e16 / e16' qui deviennent alors extérieures aux phases respectives e3 / e3', ainsi que sur les pôles e14, qui deviennent intérieurs au rotor e15, l'homme du métier pouvant effectuer cette transposition sans difficulté.

Tous les éléments qui ont été présentés dans cette invention peuvent être étendus à d'autres machines électriques tournantes ou statiques, comportant un nombre quelconque de phases électriques et de pôles électromagnétiques. La présente invention n'est pas limitée aux exemples de réalisation décrits, mais s'étend à toute modification et variante évidente pour un homme du métier, tout en restant dans l'étendue de la protection définie dans les revendications annexées.

## Revendications

1. Machine électrique homopolaire,
**caractérisée en ce que** sa structure est double (e0), son rotor et son stator étant simultanément homopolaires,
**en ce que** deux phases de machine homopolaire simple (e3) et (e3') sont alignées sur un même axe de rotation (e9), de façon à ce que leurs dents statoriques (e16 / e16') soient colinéaires dans le même plan radial (e17),
**en ce que** les phases (e3) et (e3') sont séparées par une pièce de retour de flux ferromagnétique (e1),
et **en ce que** l'ensemble formé par les phases (e3) et (e3') et la pièce de retour de flux (e1) entoure un rotor ferromagnétique (e15), qui est sensiblement centré sur le même axe de rotation (e9) ; ledit rotor ferromagnétique (e15), comportant autant de pôles saillants (e14), qu'il y a de paires de dents statoriques (e16 / e16') sur les phases.

2. Machine selon la revendication 1,
**caractérisée en ce qu'**elle comprend un empilement de paires de stators homopolaires simples (b10/d4), formant des machines élémentaires monophasées (f4), ou (f5) dans une version inversée, lesdites machines élémentaires étant alimentées en courant alternatif ; le rotor (e15) est commun à tous ces stators, et est passif c'est à dire composé de façon complète ou partielle de matériau ferromagnétique.

3. Machine selon la revendication 1 ou 2,
**caractérisée en ce que** les phases (e3) et (e3') sont séparées par une pièce de retour de flux ferromagnétique (e1) de forme sensiblement annulaire, ladite pièce (e1) étant sensiblement centrée sur le même axe de rotation (e9) que lesdites phases (e3) et (e3').

4. Machine selon l'une quelconque des revendications 1 à 3,
**caractérisée en ce qu'**elle comporte l'un des éléments suivants :
- ledit rotor ferromagnétique (e15) a une longueur axiale sensiblement égale à celle du groupe formé par les deux phases de machine homopolaire simple (e3) et (e3'),
- ledit rotor ferromagnétique (e15) est sensiblement aligné axialement avec l'ensemble formé par les deux phases de machine homopolaire simple (e3) et (e3'),
- elle comprend une bobine d'excitation rotorique homopolaire (e2) prévue pour générer un flux magnétique homopolaire (e10), qui circule par l'entrefer, le rotor (e 5), les phases (e3) et (e3') et la pièce de retour de flux magnétique (e1), ledit flux magnétique rotorique s'additionnant du côté (e5) à celui émis par la phase (e3), et s'opposant du côté (e6) à celui émis par la phase (e3'), de sorte qu'il en résulte une addition des forces électromagnétiques d'interaction correspondantes aux deux côtés (e5) et (e6) de la machine, ledit flux magnétique (e10) étant conduit au niveau du stator par la pièce ferromagnétique de retour de flux (e1).

5. Machine selon l'une des revendications 1 à 4,
**caractérisée en ce que** le rotor (e15) comprend notamment trois éléments: les pôles saillants (e14), un premier anneau (e20) et un cylindre interne (e21), lesdites pôles saillants (e14) étant réalisées dans un matériau ferromagnétique, de sorte qu'ils véhiculent le flux magnétique rotorique (e10).

6. Machine selon la revendication 5,
**caractérisée en ce que** l'anneau (e20) et le disque (e21) sont réalisés dans le même matériau que les pôles saillants (e14), formant une seule et même pièce ou plusieurs pièces différentes.

7. Machine selon la revendication 5,
**caractérisée en ce que** l'anneau (e20) et/ou le cylindre (e21) sont réalisés dans un matériau non ferromagnétique, les pôles saillants (e14) étant réalisés dans un matériau ferromagnétique.

8. Machine selon l'une des revendications 1 à 7 ,
**caractérisée en ce que** le rotor (e15) est formé d'une pièce monobloc intégrant des moyens de maintien en rotation, le cylindre (e21), l'anneau (e20) et les pôles (e14) et/ou
elle est réalisée en empilant axialement plusieurs machines complètes (eO), pour former une même phase ; lesdites machines (eO) étant alors sensiblement calées angulairement et le rotor (e 5) ayant une longueur axiale sensiblement égale à la longueur axiale de l'ensemble de machines (eO), formant ladite machine monophasée.

9. Machine selon l'une des revendications 5 à 7 ,
**caractérisée en ce que** les pôles (e14) du rotor (e15) sont vrillés de façon à ce que chacune de ses extrémités (e5) et (e6) soit décalée angulairement d'un demi-tour électrique, c'est-à-dire d'un pas polaire, ledit pas polaire correspondant à la distance entre les axes de symétrie des pôles (e14) ; les bobines statoriques (e4) et (e4') étant connectées en phase, de sorte qu'elles émettent des flux magnétiques (e12) et (e13) en phase et/ou
la bobine rotorique (e2) est alimentée en courant alternatif, à une fréquence et une phase électrique, égale ou différente de la fréquence d'alimentation des bobines statoriques (e4 / e4').

10. Machine selon l'une des revendications 5 à 9,
**caractérisée en ce qu'**elle comprend au moins une phase et comporte ainsi au moins autant de machines élémentaires (e0) formant chacune une machine monophasée que de phases électriques extérieures, de sorte que dans cette disposition polyphasée, toutes ces machines monophasées (e0) étant alignées le long de l'axe (e9) et régulièrement décalées d'un angle électrique égal à sensiblement un tour complet (360°), divisé par le nombre de phases électriques, divisé par le nombre de pôles rotoriques (e14).

11. Machine selon la revendication 6,
**caractérisée en ce que** chaque phase électrique extérieure comporte au moins deux machines élémentaires (e0) juxtaposées axialement ou distantes et séparées d'une ou plusieurs autre machines élémentaires (e0).

12. Machine selon l'une des revendications 10 et 11,
**caractérisée en ce que** le calage entre les machines monophasées (e0) est réalisé en utilisant des ergots et des trous ménagés dans des faces latérales (e23) d'un plan perpendiculaire à l'axe (e9) de la machine monophasée (e0) ; le moyen de calage angulaire étant réalisé en utilisant des ondulations complémentaires ménagées sur lesdites faces latérales (e23) dudit plan (e9).

13. Machine selon l'une quelconque des revendications 1 à 12,
**caractérisée en ce qu'**elle comprend au moins l'un des éléments suivants :
- une bobine d'excitation rotorique (e2) réalisée en bobinant du fil conducteur autour d'un mandrin isolant magnétique et électrique (e11) ; ledit mandrin étant utilisé pour caler en rotation les deux phases (e3) et (e3'), de façon à ce que leurs dents respectives soient alignées dans un même plan radial ; ledit alignement est réalisé en utilisant soit des encoches ménagées dans des faces radiales dudit mandrin (e11) et/ou des phases (e3) et (e3'), soit des ondulations sur lesdites faces, soit des trous recevant des pions de centrage, soit tout autre procédé de calage,
- une bobine d'excitation rotorique (e2) réalisée sur un support qui ne participe pas au calage angulaire entre les phases (e3) / (e3') et la pièce de retour de flux (e1),
- la bobine rotorique (e2) et/ou les bobines statoriques (e4 / e4') comprend/comprennent au moins deux bobines distinctes assemblées l'une contre l'autre, selon un plan axial et/ou radial, lesdites bobines étant connectées entre elles en parallèle et/ou en série,
- les phases statoriques (e3 / e3') et/ou la bobine rotorique (e2) sont encapsulées par une résine ou une céramique avec leur circuit magnétique, séparément, ou assemblées dans le moteur,
- elle ne comprend pas de bobine rotorique (e2), et comprend au moins un aimant (eV) de forme annulaire, magnétisé sensiblement selon l'axe (e9) ; ledit aimant annulaire (e1') étant de préférence enserré entre une ou deux pièces ferromagnétiques (e24 / e24'), de forme sensiblement trapézoïdale, annulaire, ou elliptique, qui permettent de concentrer le flux issu dudit l'aimant annulaire (e1'), lesdites pièces (e24 / e24') ayant sensiblement une forme de tronc de cône, avec le côté le plus large contre l'aimant (e1'),
- chaque dent statorique (e16) comporte sur chacune de ses extrémités angulaires un décrochement radial (e19) qui est destiné à moduler radialement la valeur de l'entrefer (eO) ; les décrochements radiaux (e19) ayant une forme radiale permettant de donner à l'entrefer local (eO) une valeur sensiblement indexée sur l'inverse d'un cosinus de l'angle électrique, dont l'origine est prise sur l'axe de symétrie de la dent (e16),
- chaque pôle rotorique (e14) comporte sur chacune de ses extrémités angulaires un décrochement radial (e20), qui est destiné à moduler radialement la valeur de l'entrefer (eO) ; les décrochements radiaux (e19) ayant une forme radiale permettant de donner à l'entrefer local (eO) une valeur sensiblement indexée sur l'inverse d'un cosinus de l'angle électrique, dont l'origine est prise sur l'axe de symétrie du pôle (e16).

## Patentansprüche

1. Elektrische Gleichpolmaschine, **dadurch gekennzeichnet, dass** ihr Aufbau doppelt ist (e0), wobei ihr Rotor und ihr Stator gleichzeitig gleichpolig sind, dass zwei Phasen (e3) und (e3') einer einfachen Gleichpolmaschine auf der gleichen Drehachse (e9) so ausgerichtet sind, dass ihre Statorzähne (e16/e16') in der gleichen radialen Ebene (e17) kollinear sind, dass die Phasen (e3) und (e3') durch ein ferromagnetisches Flussrückführungsbauteil (e1) getrennt sind, und dass die von den Phasen (e3) und (e3') und dem Flussrückführungsbauteil (e1) gebildete Einheit einen ferromagnetischen Rotor (e15) umgibt, der im Wesentlichen auf die gleiche Drehachse (e9) zentriert ist; wobei der ferromagnetische Rotor (e15) ebenso viele Schenkelpole (e14) aufweist wie es Paare von Statorzähnen (e16/e16') auf den Phasen gibt.

2. Maschine nach Anspruch 1, **dadurch gekennzeichnet, dass** sie einen Stapel von Paaren einfacher gleichpoliger Statoren (b10/d4) umfasst, die einphasige Elementarmaschinen (f4) oder (f5) in einer umgekehrten Version formen, wobei die Elementarmaschinen mit Wechselstrom gespeist werden; wobei der Rotor (e15) allen diesen Statoren gemeinsam und passiv ist, d. h. vollständig oder teilweise aus ferromagnetischen Material besteht.

3. Maschine nach Anspruch 1 oder 2, **dadurch gekennzeichnet, dass** die Phasen (e3) und (e3') durch ein im Wesentlichen ringförmiges ferromagnetisches Flussrückführungsbauteil (e1) getrennt sind, wobei das Bauteil (e1) im Wesentlichen auf die gleiche Drehachse (e9) zentriert ist wie die Phasen (e3) und (e3').

4. Maschine nach einem der Ansprüche 1 bis 3, **dadurch gekennzeichnet, dass** sie eines der folgenden Elemente aufweist:
- der ferromagnetische Rotor (e15) hat eine axiale Länge im Wesentlichen gleich derjenigen der von den zwei Phasen (e3) und (e3') einer einfachen Gleichpolmaschine geformten Gruppe,
- der ferromagnetische Rotor (e15) ist mit der von den zwei Phasen (e3) und (e3') einer einfachen Gleichpolmaschine geformten Einheit im Wesentlichen axial ausgerichtet,
- sie umfasst eine gleichpolige Rotor-Erregerspule (e2), die vorgesehen ist, einen gleichpoligen Magnetfluss (e10) zu erzeugen, der durch den Luftspalt, den Rotor (e5), die Phasen (e3) und (e3') und das magnetische Flussrückführungsbauteil (e1) fließt, wobei der Rotor-Magnetfluss sich auf der Seite (e5) zu dem von der Phase (e3) ausgesandten addiert und auf der Seite (e6) dem von der Phase (e3') ausgesandten entgegenwirkt, so dass daraus eine Addition der entsprechenden elektromagnetischen Interaktionskräfte auf den zwei Seiten (e5) und (e6) der Maschine resultiert, wobei der Magnetfluss (e10) im Bereich des Stators vom ferromagnetischen Flussrückführungsbauteil (e1) geleitet wird.

5. Maschine nach einem der Ansprüche 1 bis 4, **dadurch gekennzeichnet, dass** der Rotor (e15) insbesondere drei Elemente umfasst: die Schenkelpole (e14), einen ersten Ring (e20) und einen Innenzylinder (e21), wobei die Schenkelpole (e14) aus einem ferromagnetischen Material hergestellt sind, so dass sie den Rotor-Magnetfluss (e10) transportieren.

6. Maschine nach Anspruch 5, **dadurch gekennzeichnet, dass** der Ring (e20) und der Innenzylinder (e21) aus dem gleichen Material wie die Schenkelpole (e14) hergestellt sind, indem sie ein einziges Bauteil oder mehrere unterschiedliche Bauteile formen.

7. Maschine nach Anspruch 5, **dadurch gekennzeichnet, dass** der Ring (e20) und/oder der Zylinder (e21) aus einem nicht-ferromagnetischen Material hergestellt sind, während die Schenkelpole (e14) aus einem ferromagnetischen Material hergestellt sind.

8. Maschine nach einem der Ansprüche 1 bis 7, **dadurch gekennzeichnet, dass** der Rotor (e15) aus einem einstückigen Bauteil geformt ist, das Mittel zum Halten einer Rotation, den Zylinder (e21), den Ring (e20) und die Pole (e14) umfasst, und/oder dass sie hergestellt wird, indem axial mehrere vollständige Maschinen (e0) gestapelt werden, um eine gleiche Phase zu formen; wobei die Maschinen (e0) dann im Wesentlichen winkelmäßig verkeilt sind und der Rotor (e5) eine axiale Länge im Wesentlichen gleich der axialen Länge der Einheit von Maschinen (e0) hat, die die einphasige Maschine formen.

9. Maschine nach einem der Ansprüche 5 bis 7, **dadurch gekennzeichnet, dass** die Pole (e14) des Rotors (e15) so verwunden sind, dass jedes ihrer Enden (e5) und (e6) um eine halbe elektrische Drehung winkelversetzt sind, d. h. um eine Polteilung, wobei die Polteilung dem Abstand zwischen den Symmetrieachsen der Pole (e14) entspricht; wobei die Statorspulen (e4) und (e4') in Phase verbunden sind, so dass sie Magnetflüsse (e12) und (e13) in Phase aussenden, und/oder die Rotorspule (e2) mit Wechselstrom gespeist wird, mit einer Frequenz und einer elektrischen Phase gleich der oder anders als die Speisefrequenz der Statorspulen (e4/e4').

10. Maschine nach einem der Ansprüche 5 bis 9, **dadurch gekennzeichnet, dass** sie mindestens eine Phase umfasst und so mindestens ebenso viele Elementarmaschinen (e0), die je eine einphasige Maschine formen, wie äußere elektrische Phasen aufweist, so dass in dieser mehrphasigen Anordnung alle diese einphasigen Maschinen (e0) entlang der Achse (e9) ausgerichtet und gleichmäßig versetzt sind, um einen elektrischen Winkel gleich im Wesentlichen einer ganzen Umdrehung (360°), dividiert durch die Anzahl von elektrischen Phasen, dividiert durch die Anzahl von Rotorpolen (e14).

11. Maschine nach Anspruch 6, **dadurch gekennzeichnet, dass** jede äußere elektrische Phase mindestens zwei Elementarmaschinen (e0) aufweist, die axial nebeneinander angeordnet oder voneinander entfernt und von einer oder mehreren anderen Elementarmaschinen (e0) getrennt sind.

12. Maschine nach einem der Ansprüche 10 und 11, **dadurch gekennzeichnet, dass** die Verkeilung zwischen den einphasigen Maschinen (e0) durch Verwendung von Zapfen und Löchern hergestellt wird, die in Seitenflächen (e23) einer Ebene lotrecht zur Achse (e9) der einphasigen Maschine (e0) vorgesehen sind; wobei das zur Winkelverkeilung unter Verwendung von komplementären Wellenformen hergestellt wird, die auf den Seitenflächen (e23) der Ebene (e9) vorgesehen sind.

13. Maschine nach einem der Ansprüche 1 bis 12, **dadurch gekennzeichnet, dass** sie mindestens eines der folgenden Elemente enthält:
- eine Rotor-Erregerspule (e2), die hergestellt wird durch Wickeln von Leiterdraht um einen magnetisch und elektrisch isolierenden Dorn (e11); wobei der Dorn verwendet wird, um die zwei Phasen (e3) und (e3') in Drehung zu verkeilen, damit ihre jeweiligen Zähne in der gleichen radialen Ebene ausgerichtet sind; wobei die Ausrichtung unter Verwendung entweder von in radialen Seiten des Dorns (e11) und/oder der Phasen (e3) und (e3') vorgesehenen Kerben, oder von Wellenformen auf den Seiten, oder von Zentrierblöcke aufnehmenden Löchern, oder von jedem anderen Verkeilungsverfahren durchgeführt wird,
- eine Rotor-Erregerspule (e2), die auf einem Träger hergestellt ist, der nicht bei der Winkelverkeilung zwischen den Phasen (e3)/(e3') und dem Flussrückführungsbauteil (e1) mitwirkt,
- die Rotorspule (e2) und/oder die Statorspulen (e4/e4') umfasst/umfassen mindestens zwei unterschiedliche Spulen, die gegeneinander gemäß einer axialen und/oder radialen Ebene zusammengebaut sind, wobei die Spulen miteinander parallel und/oder in Reihe geschaltet sind,
- die Statorphasen (e3/e3') und/oder die Rotorspule (e2) werden von einem Harz oder einer Keramik mit ihrem Magnetkreis getrennt oder im Motor eingebaut, eingekapselt,
- sie enthält keine Rotorspule (e2) und enthält mindestens einen ringförmigen Magnet (eV), der im Wesentlichen gemäß der Achse (e9) magnetisiert ist; wobei der Ringmagnet (e1') vorzugsweise zwischen einem oder zwei ferromagnetischen Bauteilen (e24/e24') von im Wesentlichen Trapez-, Ring- oder Ellipsenform eingeklemmt ist, die es ermöglichen, den vom Ringmagnet (e1') stammenden Fluss zu konzentrieren, wobei die Bauteile (e24/e24') im Wesentlichen die Form eines Kegelstumpfs haben, mit der breitesten Seite gegen den Magnet (e1'),
- jeder Statorzahn (e16) weist an jedem seiner Winkelenden eine radiale Abweichung (e19) auf, die dazu bestimmt ist, den Wert des Luftspalts (e0) radial zu modulieren; wobei die radialen Abweichungen (e19) eine radiale Form haben, die es ermöglicht, dem lokalen Luftspalt (e0) einen Wert zu verleihen, der im Wesentlichen auf den Umkehrwert eines Kosinus des elektrischen Winkels indiziert ist, dessen Anfang auf der Symmetrieachse des Zahns (e16) liegt,
- jeder Rotorpol (e14) weist an jedem seiner Winkelenden eine radiale Abweichung (e20) auf, die dazu bestimmt ist, den Wert des Luftspalts (e0) radial zu modulieren; wobei die radialen Abweichungen (e19) eine radiale Form haben, die es ermöglicht, dem lokalen Luftspalt (e0) einen Wert zu verleihen, der im Wesentlichen auf den Umkehrwert eines Kosinus des elektrischen Winkels indiziert ist, dessen Anfang auf der Symmetrieachse des Pols (e14) liegt.

## Claims

1. Homopolar electrical machine,
**characterised in that** it is double (e0) in structure, its rotor and its stator being simultaneously homopolar,
**in that** two simple homopolar machine phases (e3) and (e3') are aligned on a same axis of rotation (e9) such that their stator teeth (e16 / e16') are co-linear in the same radial plane (e17),
**in that** the phases (e3) and (e3') are separated by a ferromagnetic flux return part (e1),
and **in that** the assembly formed by the phases (e3) and (e3') and the flux return part (e1) surrounds a ferromagnetic rotor (e15) which is substantially centred on the same axis of rotation (e9), said ferromagnetic rotor (e15) comprising as many projecting poles (e14) as there are pairs of stator teeth (e16 / e16') on the phases.

2. Machine as claimed in claim 1,
**characterised in that** it comprises a stack of pairs of simple homopolar stators (b10/d4) forming single-phase elementary machines (f4) or (f5) in an inverted version, said elementary machines being powered with alternating current, and the rotor (e15) is common to all these stators and is passive, i.e. consists wholly or partially of ferromagnetic material.

3. Machine as claimed in claim 1 or 2,
**characterised in that** the phases (e3) and (e3') are separated by a ferromagnetic flux return part (e1) of a substantially annular shape, said part (e1) being substantially centred on the same axis of rotation (e9) as said phases (e3) and (e3').

4. Machine as claimed in any one of claims 1 to 3,
**characterised in that** it comprises one of the following elements:
- said ferromagnetic rotor (e15) has an axial length substantially equal to that of the group formed by the two simple homopolar machine phases (e3) and (e3'),
- said ferromagnetic rotor (e15) is substantially aligned axially with the assembly formed by the two simple homopolar machine phases (e3) and (e3'),
- it comprises a homopolar rotor excitation coil (e2) provided for generating a homopolar magnetic flux (e10) which flows via the air gap, the rotor (e 5), the phases (e3) and (e3') and the magnetic flux return part (e1), said rotor magnetic flux being added on side (e5) to that emitted by the phase (e3) and on side (e6) opposing that emitted by the phase (e3') such that there is a resulting addition of the corresponding interaction electromagnetic forces at the two sides (e5) and (e6) of the machine, said magnetic flux (e10) being guided in the stator by the ferromagnetic flux return part (e1).

5. Machine as claimed in one of claims 1 to 4,
**characterised in that** the rotor (e15) comprises in particular three elements: the projecting poles (e14), a first ring (e20) and an internal cylinder (e21), said projecting poles (e14) being made of a ferromagnetic material so that they carry the rotor magnetic flux (e10).

6. Machine as claimed in claim 5,
**characterised in that** the ring (e20) and the disc (e21) are made of the same material as the projecting poles (e14), forming one and the same part or multiple different parts.

7. Machine as claimed in claim 5,
**characterised in that** the ring (e20) and/or the cylinder (e21) are made of a non-ferromagnetic material, the projecting poles (e14) being made of a ferromagnetic material.

8. Machine as claimed in one of claims 1 to 7,
**characterised in that** the rotor (e15) is formed of a single part integrating means for maintaining rotation, the cylinder (e21), the ring (e20) and the poles (e14) and/or
it is implemented by axially stacking several complete machines (eO) to form one phase, said machines (eO) then being substantially fixed in their angular position and the rotor (e 5) having an axial length substantially equal to the axial length of the set of machines (eO) forming said single-phase machine.

9. Machine as claimed in one of claims 5 to 7,
**characterised in that** the poles (e14) of the rotor (e15) are twisted so that each of its ends (e5) and (e6) is angularly offset by an electrical half-turn, i.e. by a polar pitch, said polar pitch corresponding to the distance between the axes of symmetry of the poles (e14), the stator coils (e4) and (e4') being phase connected such that they emit magnetic fluxes (e12) and (e13) in phase and/or
the rotor coil (e2) is powered with alternating current at an electrical phase and frequency equal to or different from the power frequency of the stator coils (e4 / e4').

10. Machine as claimed in one of claims 5 to 9,
**characterised in that** it comprises at least one phase and thus comprises at least as many elementary machines (e0) each forming a single-phase machine as there are external electrical phases such that in this multi-phase arrangement, all these single-phase machines (e0) are aligned along the axis (e9) and are regularly offset by an electrical angle substantially equal to a complete turn (360°), divided by the number of electrical phases, divided by the number of rotor poles (e14).

11. Machine as claimed in claim 6,
**characterised in that** each external electrical phase comprises at least two elementary machines (e0) axially juxtaposed or distanced and separated by one or more other elementary machines (e0).

12. Machine as claimed in one of claims 10 and 11,
**characterised in that** the spacing between the single-phase machines (e0) is created using pins and holes arranged in side faces (e23) of a plane perpendicular to the axis (e9) of the single-phase machine (e0), the angular positioning means being implemented using complementary undulations arranged in said side faces (e23) of said plane (e9).

13. Machine as claimed in any one of claims 1 to 12,
**characterised in that** it comprises at least one of the following elements:
- a rotor excitation coil (e2) created by winding conductive wire around an electrically and magnetically insulating mandrel (e11), said mandrel being used to rotationally position the two phases (e3) and (e3') such that their respective teeth are aligned in a same radial plane, said alignment being achieved using either notches arranged in radial faces of said mandrel (e11) and/or of the phases (e3) and (e3'), or undulations on said faces, or holes receiving centring pins, or any other positioning method,
- a rotor excitation coil (e2) created on a support which does not contribute to fixing the angular positioning between the phases (e3) / (e3') and the flux return part (e1),
- the rotor coil (e2) and/or the stator coils (e4 / e4') comprises/comprise at least two separate coils assembled one against the other in an axial and/or radial plane, said coils being connected to one another in parallel and/or in series,
- the stator phases (e3 / e3') and/or the rotor coil (e2) are encapsulated by a resin or a ceramic with their magnetic circuit, separately or when assembled in the motor,
- it does not comprise a rotor coil (e2), and comprises at least one magnet (eV) that is annular in shape, substantially magnetised along the axis (e9), said annular magnet (e1') preferably being clasped between one or two ferromagnetic parts (e24 / e24') of a substantially trapezoidal, annular or elliptical shape, which enables the flux issuing from said annular magnet (e1') to be concentrated, said parts (e24 / e24') substantially having the shape of a truncated cone, with the largest side against the magnet (e1'),
- each stator tooth (e16) comprises, at each of its angular ends, a radial recess (e19) which is intended to radially adjust the value of the air gap (eO), the radial recesses (e19) having a radial shape which enables the local air gap (eO) to be set at a value substantially indexed to the inverse cosine of the electrical angle, for which the origin is on the axis of symmetry of the tooth (e16),
- each rotor pole (e14) comprises, at each of its angular ends, a radial recess (e20) which is intended to radially adjust the value of the air gap (eO), the radial recesses (e19) having a radial shape which enables the local air gap (eO) to be set at a value substantially indexed to the inverse cosine of the electrical angle, for which the origin is on the axis of symmetry of the pole (e16).
